# EUROPEAN PATENT SPECIFICATION

(11) **EP 1 371 991 B1**
(45) Date of publication and mention of the grant of the patent: **10.08.2016**
(21) Application number: 02012497.0
(22) Date of filing: 12.06.2002
(51) Int. Cl.: G01P 3/44, F16C 41/00, F16C 33/78, F16C 19/38, B61F 15/20

(54) **Device for determining the rotational speed of a bearing**
Vorrichtung zur Bestimmung der Geschwindigkeit eines Lagers
Dispositif pour la détermination de la vitesse d'un roulement

(43) Date of publication of application: 17.12.2003
(73) Proprietor: SKF INDUSTRIE S.p.A., 10121 Torino (IT)
(72) Inventor: Moretti, Roberto, 10020 Cambiano (TO) (IT); Genero, Matteo, 10026 Santena (TO) (IT)

(56) References cited:
- EP-A- 0 438 624
- EP-A- 0 464 403
- EP-A- 0 657 738
- DE-A- 4 312 424
- US-A- 4 946 296
- US-A- 5 184 069
- US-A- 5 261 752
- US-A- 5 611 545
- US-A- 5 873 658
- US-B1- 6 179 471

## Description

The present invention relates to a surveying device (in other words a sensing device) for the running parameters of railway bearings.

The Italian patent Application No. T096A000752 describes a sensing device for the rotation speed applied to a bearing for railway axles, and it comprises a magnetic wheel which generates impulses; a sensor which faces the magnetic wheel in order to receive the impulses; two sealing shields which are mounted onto a rotating race and a non-rotating race of the bearing, and which, respectively, support the magnetic wheel and the sensor.

From US 4946296 it is known a sensing device, which comprises a sealing shield, a sealing covering, an encoder element and a sensor, and it is used in wheel bearings for motor vehicles. And from EP 0 657 738 B1 it is known a sealing shield.

The aim of the present invention is to produce a sensing device for the running parameters of railway bearings, which presents better sealing qualities than those presented by the device described in the above-mentioned patent application, and which is also defined by a reduced number of components, so that it is both simple and cost-effective to manufacture.

According to the present invention, a sensing device for the running parameters of railway bearing will be produced which is provided with a rotating race and a non-rotating race of the railway bearing itself, the device comprising:
- a sealing shield which is mounted on the non-rotating race;
- a sealing covering which is integral with the shield and which is in contact with a sliding surface which is integral with the rotating race;
- a signal generating element which is integral with the sliding surface itself and which is arranged outside the shield; and
- a sensor, which faces the generating element in order to read the signal itself, and which sensor itself is also integral with the shield in a position which is outside the railway bearing.

The present invention will now be described with reference to the attached drawings, which illustrate a non-limiting form of embodiment of the present invention and in which:
FIGURE 1 is an axial section view, with some parts removed for reasons of clarity, of a preferred form of embodiment of a sensing device for the running parameters of railway bearings produced according to the present invention;
FIGURE 2 is an elevated front view of the device illustrated in FIGURE 1;
FIGURE 3 is a view from above of the device illustrated in FIGURE 1;
FIGURE 4 is an axial section view, with some parts removed for reasons of clarity, of a second preferred form of embodiment of the device illustrated in FIGURE 1;
FIGURE 5 is an elevated front view of the device illustrated in FIGURE 3;
FIGURES 6 and 7 are front views, on a reduced scale, of respective possible configurations of the device illustrated in FIGURE 1 and/or the device illustrated in FIGURE 4; and
FIGURES 8 - 12 are axial section views, with some parts removed for reasons of clarity, of respective alternative preferred forms of embodiment of the device illustrated in FIGURE 1.

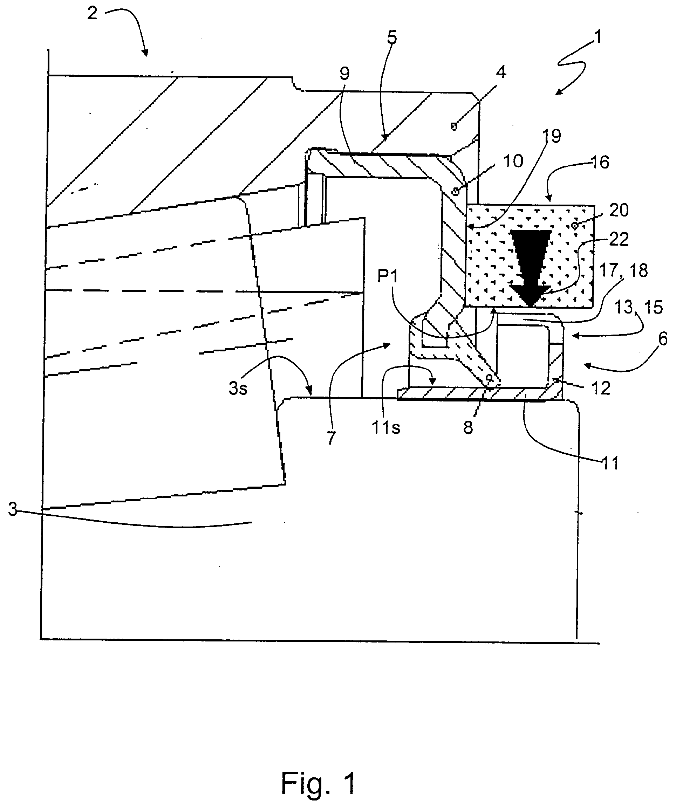

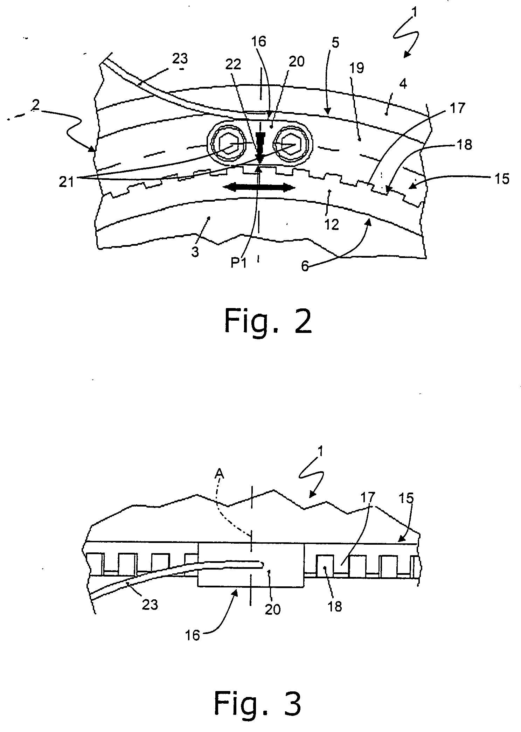

With reference to FIGURE 1, the number 1 indicates, in its entirety, a sensing device for the running parameters of a railway bearing 2 which comprises a rotating race 3 and a non-rotating race 4 which are coaxial to each other and to a rotation axis A (FIGURE 3) of the railway bearing 2 itself.

The device 1 comprises a sealing shield 5 which is mounted onto the non-rotating race 4, an annular element 6 which is mounted onto the rotating race 3, and a sealing covering 7 which is integral with the shield 5 and which is provided with a lip 8 which his turned towards the element 6.

In particular, in an axial section which is intended as a section obtained by means of a passing plane for the axis A and for any diameter of the railway bearing 2, the shield 5 presents a shape which is substantially in the form of an L, and comprises a cylindrical wall 9 which is mounted inside and in contact with the non-rotating race 4, and an annular wall 10, which extends transversally to the axis A between the two races 3 and 4 starting from the wall 9 towards the race 3, and which supports the covering 7 in correspondence with one of its own internal radial free ends.

The element 6 comprises a cylindrical wall 11, which is shrink fit onto an internal radial surface 3s of the race 3, and which is radially delimited towards the inside by a cylindrical surface 11s which is arranged in sliding contact with the lip 8. The element 6 also comprises an annular wall 12, which is transverse to the axis A and is axially staggered towards the outside of the railway bearing 2 in relation to the wall 10, and a further cylindrical wall 13, which is integral with the wall 12, and which extends transversally to the wall 12 itself towards the shield 5 while overlapping the surface 11s in an axial direction.

The device 1 also comprises a signal generating element 15, and a sensor 16 which faces the signal generating element 15 in order to red the signal itself.

The signal generating element 15 is defined by a phonic wheel which is obtained directly on the wall 13 by alternating a number of teeth 17 and a number of notches 18 in relation to each other, the rotation of which around the axis A, together with the rotating race 3 of the railway bearing 2, turns the wall 13 into an emission wall which emits a signal which is captured by the sensor 16. As an alternative to the teeth 17 and the notches 18, it is possible to provide a number of magnetised areas which have alternating magnetic fields: the effect on the sensor 16 is, however identical, as both the teeth 17 and the positively magnetised areas can be considered to be the equivalent of positive poles, and both the notches 18 and the negatively magnetised areas can be considered to be the equivalent of negative poles or vice versa.

As is illustrated in FIGURES 1, 2 and 3, the sensor 16 is mounted onto an external surface 19 of the wall 10, is physically separate from the shield 5, and comprises a main body 20 and two fixing screws 21 for fixing the body 20 to the wall 10 itself. As an alternative to the fixing screws 21, the sensor 16 can also comprise a rapid coupling system or any other element which is suitable for guaranteeing the rapid removal of the sensor 16 in the case of any damage or breakdown.

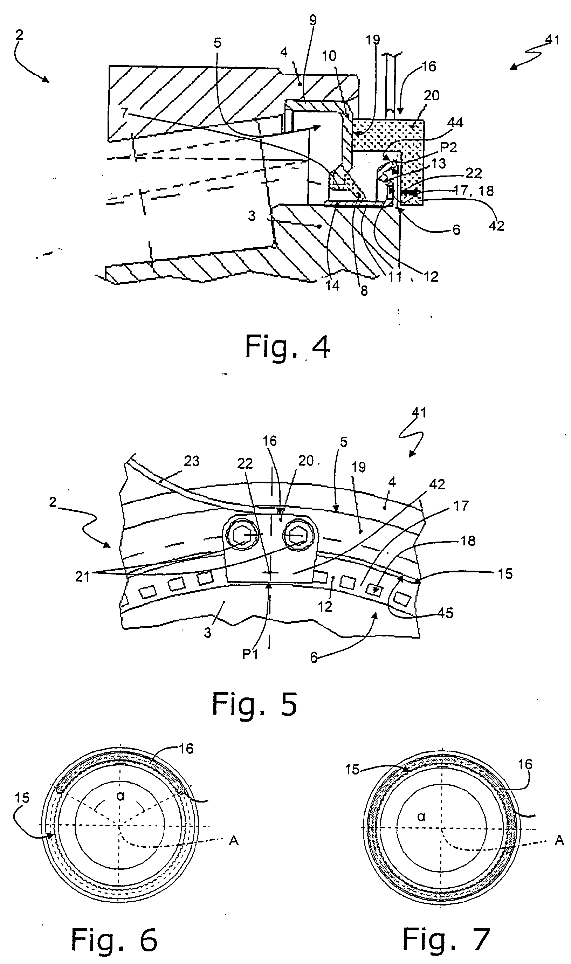

Furthermore, the sensor 16 comprises a connecting cable 23 which connects the sensor 16 itself to a peripheral decoding unit (of a well-known kind, which is not illustrated), and a sensitive element 22, which is arranged in a position facing the wall 13 on a cylindrical plane P1 which is coaxial to the rotation axis A and which, as is illustrated in FIGURES 6 and 7, extends around the axis A itself in a circumference arc which is of a determined width or which, alternatively, is equal to a circle.

The sensing device which has just been described is particularly suitable for being applied to a railway bearing 2 and, by simply inserting a number of analogous transducers to the sensitive element 22 inside the sensor 16, it can also be used for a number of different parameters such as, for example, the speed and direction of rotation, the temperature, vibrations, humidity or dampness, or the eventual presence of fumes or smoke. Furthermore, if the element 5 is produced as has been described above, it is possible to reduce production costs and it is also possible to use the sealing covering 7 by exploiting its well-known characteristics of sealing and efficiency.

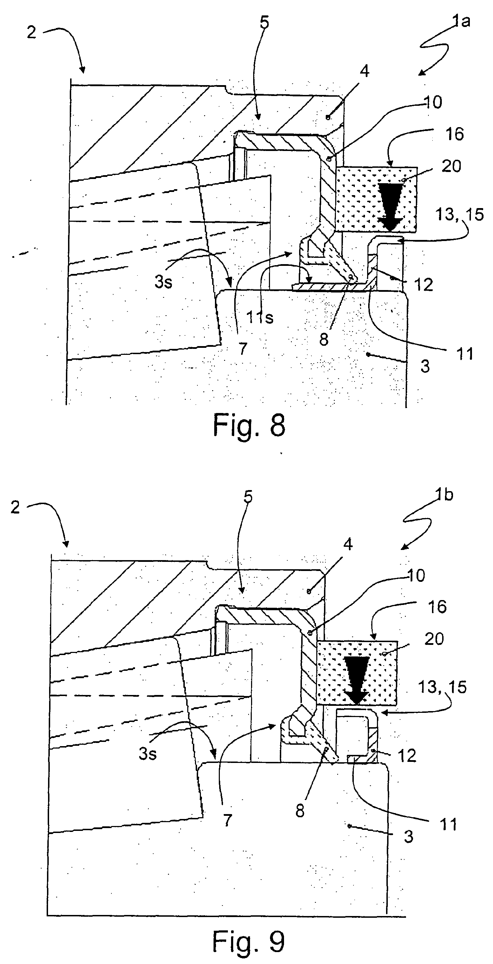

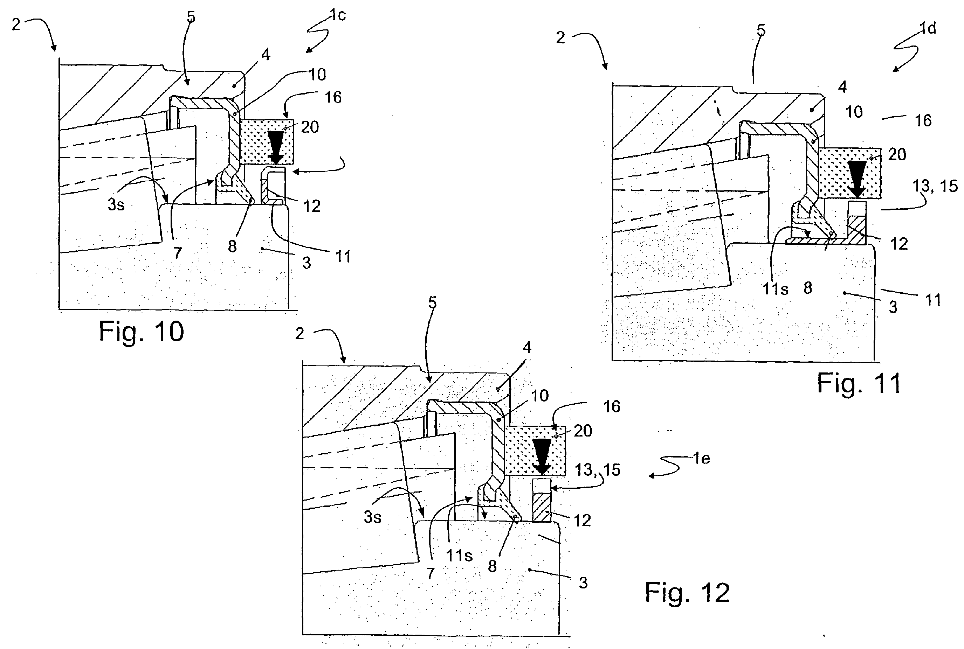

The forms of embodiment which are illustrated in FIGURES 8, 9, 10, 11 and 12 relate, respectively, to a sensing device 1a, 1b, 1c, 1d and 1e which is analogous to the device 1, from which:
the device 1a differs from the device 1 due to the fact that, while the wall 13 still extends transversally to the wall 12, it is opposite the shield 5 and overlaps the surface 3s in an axial direction;
the device 1b differs from the device 1 due to the fact that the annular element 6 is not provided with a large part of the wall 11, and so the lip 8 is arranged in direct sliding contact with the surface 3s as well as with the surface 11s;
the device 1c differs from the device 1 due to the fact that the wall 11 extends opposite the shield 5 leaving the lip 8 in direct sliding contact with the surface 3s, and also due to the fact that the wall 13 still extends transversally to the wall 12, but opposite the shield 5 and so overlapping the wall 11 in an axial direction;
the device 1d differs from the device 1 due to the fact that the wall 12 presents a thickness which is such as to completely incorporate the wall 13 inside one of its own external free radial ends: and
the device 1e differs from the device 1 due to the fact that the wall 12 presents a thickness which is such as to completely incorporate the wall 13 inside one of its own free radial ends, and also due to the fact that there is no wall 11, so the lip 8 is arranged in direct sliding contact with the surface 3s and the element 6 is presented in its simplest form.

So, the body 20 of the sensor 16 presents an appendage 42, which is arranged transversally to the axis A, and which extends frontally to the wall 12. While the sensitive element 22 is supported by the appendage 42, it is arranged in a position which faces the wall 12 on an annular plane P2 which is transverse to the rotation axis A and, as is illustrated in FIGURES 5 and 6, it extends around the axis A itself in a circumference arc of a determined width or which, alternatively, is equal to a circle.

Furthermore, the device 41 differs from the device 1 due to the fact that the wall 13 no longer extends towards the shield 5, but, instead, it extends towards the outside of the railway bearing 2 in such a way as to define an external radial appendage 13 which is substantially in the shape of a truncated cone. The appendage 13 together with the body 20 of the sensor 16 creates a hollow space 44, which is provided with a window 45 which substantially faces the sensitive element 22.

The sensing device 41 which has just been described presents the same advantages as the device 1, to which should be added the centrifugal effect which results in the expulsion of any eventual detritus towards the hollow space 44 in dynamic conditions.

According to a form of embodiment which is not illustrated in the attached drawings, but which may be easily deduced in accordance with the above-written description, the sensor 16, instead of being physically separate from the shield 5, is incorporated into the shield 5 itself, and is defined by a body which is rendered integral with the second shield itself by means of cold pressing, or welding, resin finishing or moulding, or by means of other well-known techniques.

It is intended that the present invention should not be limited to the forms of embodiment which are herein described and illustrated, which are to be considered as examples of forms of embodiment of the sensing for the running parameters of railway bearings, and which may be subject to further modifications in terms of the shape and disposition of the parts, as well as details pertaining to construction and assembly.

## Claims

1. A sensing device (1, 1a, 1b, 1c, 1d, 1e) for the running parameters of a railway bearing (2), wherein said railway bearing (2) is a tapered roller bearing including a rotating race (3) having a rotational axis (A) and a non-rotating race (4), the device comprising:
a substantially L-shaped sealing shield (5) which is adapted to be mounted on a radially inner surface of the non-rotating race (4) and which consists of a cylindrical wall (9) adapted to be mounted inside and in contact with the non-rotating race (4) and an annular wall (10) extending transversally to the axis (A) between the two races (3, 4);
a sealing covering (7) integral with a free end of the annular wall (10) of the shield (5) and adapted to be in contact with a sliding surface (3s, 11s) that forms part of or is integral with a radially outer surface of the rotating race (3);
an element (6) adapted to be shrink-fit onto the radially outer surface of the rotating race (3) and comprising a radial wall (12), the radial wall (12) of the element (6) being arranged axially outside the shield (5), the element (6) being provided with teeth and notches (17, 18) or alternating magnetised areas;
and a sensor (16) facing the element (6) and adapted to sense the rotation of the teeth and notches (17, 18) or alternating magnetised areas, wherein the sensor (16) comprises a main body (20) and fixing means (21) adapted to fix the main body (20) of the sensor (16) in a removable manner onto an external surface (19) of the annular wall (10) of the shield (5) in a position which is axially outside the sealing shield (5) and the railway bearing (2).

2. Sensing device according to claim 1, wherein the element (6) further comprises a first cylindrical wall (13) which comprises said teeth and notches (17, 18) or alternating magnetised areas and which is arranged coaxial to said axis (A) and extends towards said shield (5) and also faces said sliding surface (11s, 3s)

3. Sensing device according to claim 1, wherein the element (6) further comprises a first cylindrical wall (13) which comprises said teeth and notches (17, 18) or alternating magnetised areas and which is coaxially arranged in relation to said axis (A) and extends away from said shield (5).

4. Sensing device according to claim 2 or 3, wherein the sliding surface (11s) is defined by a second cylindrical wall (11) of the element (6) which is shrink fit onto said rotating race (3).

5. Sensing device according to claim 1, wherein the radial wall (12) of said element (6) comprises said teeth and notches (17, 18) or alternating magnetised areas.

6. Sensing device according to any of the claims from 2 to 4, wherein the sensor (16) comprises a sensitive element (22) which is arranged in a position facing the first cylindrical wall (13) of the element (6).

7. Sensing device according to claim 1, wherein said sensor (16) extends around the rotation axis (A) in a circumference arc (α).

8. Sensing device according to claim 1, wherein said sensor (16) extends around the rotation axis (A) along a circle.

9. Sensing device according to claim 7 or 8, wherein it comprises a number of transducers which are arranged inside the sensor (16) in order to sense further parameters such as speed and direction of rotation, temperature, vibrations, humidity or dampness, or the presence of fumes or smoke.

## Patentansprüche

1. Erfassungsvorrichtung (1, 1a, 1b, 1c, 1d, 1e) für die Laufparameter eines Eisenbahnlagers (2), wobei das Eisenbahnlager (2) ein Kegelrollenlager ist, das einen rotierenden Laufring (3) mit einer Drehachse (A) und einen nicht rotierenden Laufring (4) umfasst, wobei die Vorrichtung Folgendes umfasst:
eine im Wesentlichen L-förmige abdichtende Abschirmung (5), die zur Befestigung an einer radial inneren Fläche des nicht rotierenden Laufrings (4) ausgeführt ist und die aus einer zylinderförmigen Wand (9), die dazu ausgeführt ist, in dem nicht rotierenden Laufring (4) und damit in Kontakt befestigt zu werden, und einer ringförmigen Wand (10), die sich in Querrichtung zur Achse (A) zwischen den beiden Laufringen (3, 4) erstreckt, besteht;
eine abdichtende Abdeckung (7), die mit einem freien Ende der ringförmigen Wand (10) der Abschirmung (5) integral und dazu ausgeführt ist, mit einer Gleitfläche (3s, 11s), die Teil einer radial äußeren Fläche des rotierenden Laufrings (3) oder damit integral ist, in Kontakt zu stehen;
ein Element (6), das dazu ausgeführt ist, auf die radial äußere Fläche des rotierenden Laufrings (3) aufgeschrumpft zu werden, und eine radiale Wand (12) umfasst, wobei die radiale Wand (12) des Elements (6) axial außerhalb der Abschirmung (5) angeordnet ist, wobei das Element (6) mit Zähnen und Kerben (17, 18) oder alternierenden magnetisierten Bereichen versehen ist;
und einen Sensor (16), der zum Element (6) weist und zur Erfassung der Drehung der Zähne und Kerben (17, 18) oder der alternierenden magnetisierten Bereiche ausgeführt ist, wobei der Sensor (16) einen Hauptkörper (20) und Befestigungsmittel (21), die zum Fixieren des Hauptkörpers (20) des Sensors (16) auf lösbare Weise an einer externen Fläche (19) der ringförmigen Wand (10) der Abschirmung (5) in einer Position, die axial außerhalb der abdichtenden Abschirmung (5) und des Eisenbahnlagers (2) liegt, ausgeführt sind, umfasst.

2. Erfassungsvorrichtung nach Anspruch 1, wobei das Element (6) ferner eine erste zylinderförmige Wand (13) umfasst, die die Zähne und Kerben (17, 18) oder alternierenden magnetisierten Bereiche umfasst und die koaxial zur Achse (A) angeordnet ist und sich zu der Abschirmung (5) erstreckt und des Weiteren zur Gleitfläche (11s, 3s) weist.

3. Erfassungsvorrichtung nach Anspruch 1, wobei das Element (6) ferner eine erste zylinderförmige Wand (13) umfasst, die die Zähne und Kerben (17, 18) oder alternierenden magnetisierten Bereiche umfasst und die koaxial bezüglich der Achse (A) angeordnet ist und sich von der Abschirmung (5) weg erstreckt.

4. Erfassungsvorrichtung nach Anspruch 2 oder 3, wobei die Gleitfläche (11s) durch eine zweite zylinderförmige Wand (11) des Elements (6) definiert wird, die auf den rotierenden Laufring (3) aufgeschrumpft ist.

5. Erfassungsvorrichtung nach Anspruch 1, wobei die radiale Wand (12) des Elements (6) die Zähne und Kerben (17, 18) oder alternierenden magnetisierten Bereiche umfasst.

6. Erfassungsvorrichtung nach einem der Ansprüche 2 bis 4, wobei der Sensor (16) ein empfindliches Element (22) umfasst, das in einer zur ersten zylinderförmigen Wand (13) des Elements (6) weisenden Position angeordnet ist.

7. Erfassungsvorrichtung nach Anspruch 1, wobei sich der Sensor (16) in einem Umfangsbogen (α) um die Drehachse (A) erstreckt.

8. Erfassungsvorrichtung nach Anspruch 1, wobei sich der Sensor (16) entlang einem Kreis um die Drehachse (A) erstreckt.

9. Erfassungsvorrichtung nach Anspruch 7 oder 8, wobei sie eine Reihe von Wandlern umfasst, die in dem Sensor (16) zur Erfassung weiterer Parameter, wie z. B. Drehzahl und Drehrichtung, Temperatur, Vibrationen, Feuchtigkeit oder Feuchte oder das Vorliegen von Dämpfen oder Rauch, angeordnet sind.

## Revendications

1. Dispositif de détection (1, 1a, 1b, 1c, 1d, 1e) pour les paramètres de fonctionnement d'un roulement ferroviaire (2), ledit roulement ferroviaire (2) étant un roulement à rouleaux coniques comprenant une bague rotative (3) présentant un axe de rotation (A) et une bague non rotative (4), le dispositif comprenant :
un élément de protection (5) étanche essentiellement en forme de L qui est conçu pour être installé sur une surface radialement intérieure de la bague non rotative (4) et qui est constitué d'une paroi cylindrique (9) conçue pour être installée à l'intérieur de la bague non rotative (4) et en contact avec celle-ci et d'une paroi annulaire (10) s'étendant transversalement à l'axe (A) entre les deux bagues (3, 4) ;
un élément couvrant (7) étanche faisant partie intégrante d'une extrémité libre de la paroi annulaire (10) de l'élément de protection (5) et conçu pour être en contact avec une surface de glissement (3s, 11s) qui fait partie ou partie intégrante d'une surface radialement extérieure de la bague rotative (3) ;
un élément (6) conçu pour être fretté sur la surface radialement extérieure de la bague rotative (3) et comprenant une paroi radiale (12), la paroi radiale (12) de l'élément (6) étant disposée axialement à l'extérieur de l'élément de protection (5), l'élément (6) étant muni de dents et de crans (17, 18) ou de zones aimantées alternées ;
et un capteur (16) faisant face à l'élément (6) et conçu pour détecter la rotation des dents et des crans (17, 18) ou des zones aimantées alternées, dans lequel le capteur (16) comprend un corps principal (20) et des moyens de fixation (21) conçus pour fixer le corps principal (20) du capteur (16), de manière amovible, sur une surface extérieure (19) de la paroi annulaire (10) de l'élément de protection (5) dans une position qui se trouve axialement à l'extérieur de l'élément de protection (5) étanche et du roulement ferroviaire (2).

2. Dispositif de détection selon la revendication 1, dans lequel l'élément (6) comprend en outre une première paroi cylindrique (13) qui comprend lesdites dents et lesdits crans (17, 18) ou lesdites zones aimantées alternées et qui est disposée de manière coaxiale vis-à-vis dudit axe (A) et s'étend en direction dudit élément de protection (5) et également qui fait face à ladite surface de glissement (11s, 3s).

3. Dispositif de détection selon la revendication 1, dans lequel l'élément (6) comprend en outre une première paroi cylindrique (13) qui comprend lesdites dents et lesdits crans (17, 18) ou lesdites zones aimantées alternées et qui est disposée de manière coaxiale vis-à-vis dudit axe (A) et s'étend dans une direction s'éloignant dudit élément de protection (5).

4. Dispositif de détection selon la revendication 2 ou 3, dans lequel la surface de glissement (11s) est définie par une seconde paroi cylindrique (11) de l'élément (6) qui est frettée sur ladite bague rotative (3).

5. Dispositif de détection selon la revendication 1, dans lequel la paroi radiale (12) dudit élément (6) comprend lesdites dents et lesdits crans (17, 18) ou lesdites zones aimantées alternées.

6. Dispositif de détection selon l'une quelconque des revendications 2 à 4, dans lequel le capteur (16) comprend un élément sensible (22) qui est disposé dans une position faisant face à la première paroi cylindrique (13) de l'élément (6).

7. Dispositif de détection selon la revendication 1, dans lequel ledit capteur (16) s'étend autour de l'axe de rotation (A) en un arc de cercle (α).

8. Dispositif de détection selon la revendication 1, dans lequel ledit capteur (16) s'étend autour de l'axe de rotation (A) le long d'un cercle.

9. Dispositif de détection selon la revendication 7 ou 8, comprenant un certain nombre de transducteurs qui sont disposés à l'intérieur du capteur (16) afin de détecter des paramètres supplémentaires tels que la vitesse et la direction de rotation, la température, les vibrations, l'humidité ou la présence d'émanations ou de fumée.
